Europäisches Patentamt

European Patent Office

Office européen des brevets

(19)

(11) Publication number: 0 467 403 A2

# EUROPEAN PATENT APPLICATION

(12)

(21) Application number: 91112144.0

(22) Date of filing: 19.07.91

(51) Int. Cl.⁵: H04N 7/00

(30) Priority: 19.07.90 JP 189416/90

(43) Date of publication of application:
22.01.92 Bulletin 92/04

(84) Designated Contracting States:
DE FR NL

(71) Applicant: NIPPON TELEVISION NETWORK
CORPORATION
14 Niban-cho, Chiyoda-ku
Tokyo,102-40(JP)

Applicant: Kabushiki Kaisha Toshiba
72, Horikawa-cho Saiwai-ku
Kawasaki-shi(JP)

(72) Inventor: Yasuki, Seijiro, c/o Intellectual
Property Div.
K.K. Toshiba, 1-1 Shibaura 1-chome
Minato-ku, Tokyo 105(JP)
Inventor: Kawai, Kiyoyuki, c/o Intellectual
Property Div.
K.K. Toshiba, 1-1 Shibaura 1-chome
Minato-ku, Tokyo 105(JP)

(74) Representative: Henkel, Feiler, Hänzel &
Partner
Möhlstrasse 37
W-8000 München 80(DE)

(54) Multiplexed signal transmitting apparatus and multiplexed signal receiving apparatus.

(57) A multiplexed signal transmitting apparatus of this invention can transmit a first image signal, which is for a screen longer in the lateral direction than a screen obtained by a conventional television signal, by converting it to a signal that can be reproduced by a receiver of a conventional scheme. A first encoder (903, 950) limits the band of the first image signal to provide a first component, and compresses the first component in the vertical direction, thereby converting the first image signal to a second image signal corresponding to a first portion of the screen of the conventional television receiver on its vertically central panel. A second encoder (300) compresses a second component, obtained by removing the first component from the first image signal, in the vertical direction, and encoding the frequency of the compressed second component to be a third image signal which can be multiplexed on second portions of the screen of the conventional television receiver on its upper and lower panels which are different from the first portion. A motion detector (121) detects image motion data by using the second image signal, controls a constant of a coefficient multiplier (119) based on the motion detection signal, and controls the level of the third image signal. A switch (928) and an adder (927) output the third image signal which is level-controlled to correspond to the upper and lower panels of the screen, and the second image signal to correspond to the vertically central panels of the screen.

300 HIGH-FREQUENCY
COMPONENT ENCODER

(ENCODER)

F I G. 1

The present invention relates to a multiplexed signal transmitting apparatus and a multiplexed signal receiving apparatus for transmitting and receiving a wide aspect signal capable of forming a screen longer in the lateral direction than a screen formed by image signals employed in the conventional television scheme.

The aspect ratio of the screen of an existing ordinary television receiver is 4 : 3. A system that can process a television signal for a wide screen (to be referred to as a wide screen signal hereinafter) longer than that of the current television receiver and having an aspect ratio of 16 : 9 has been developed.

In order to directly broadcast a wide screen signal, a leased transmission line and a corresponding receiver are necessary. Therefore, a technique is proposed for converting a wide screen signal such that it can be transmitted on an existing transmission line, and transmitting the converted signal as a compatible signal. The compatible signal transmitted on the transmission line can be received and reproduced by an existing television receiver. If it is received with a wide screen television receiver, it can be reproduced to form a wide screen.

The following two schemes are available for obtaining a compatible signal:

(1) Side Panel Scheme

A center panel having an aspect ratio of 4 : 3 is extracted from a wide screen having an aspect ratio of 16 : 9, and only the center panel is displayed by a television receiver having an aspect ratio of 4 : 3. As a result, the two side portions (side panels) of the wide screen left by extraction are not displayed by the television receiver having the aspect ratio of 4 : 3.

(2) Letter Box Scheme

A wide screen signal having an aspect ratio of 16 : 9 is directly compressed to 3/4 in the vertical direction, and horizontal compression is canceled. A compatible signal transmitted in accordance with this scheme forms an image only on the vertically central portion of the screen of a television receiver having an aspect ratio of 4 : 3. As a result, a wide screen is entirely displayed by the television receiver having an aspect ratio of 4 : 3. However, since the screen size is compressed to 3/4 in the vertical direction, no image is formed on upper and lower regions of the screen.

The above two schemes are described in, e.g., literature (1): ITEJ (Television Society) Technical Report Vol. 13, No. 41, pp. 55 - 60, BSC '89 - 10 (Sept. 1989).

On literature (2): ITEJ (Television Society) Technical Report Vol. 13, No. 41, pp. 1 - 6, BCS '89 - 1 (Aug.), "Development in AD TV System (1)-", a high definition technique is described.

According to literature (2), a wide aspect image signal is transmitted in the manner as described above, and high definition data of up to 7.7 MHz is transmitted in the band of 4.2 MHz with the conventional scheme.

An encoder in literature (2) can add data of up to 7.7 MHz as Y high definition data to a Y signal and can transmit the sum signal. C high definition data can be added to C signals.

Regarding the Y signal, the Y high definition data is sampled using a 2-frame offset subcarrier and transmitted as it is interleaved in a signal of the screen center panel with respect to the frequency. In accordance with this transmission scheme, when a still image is to be transmitted, high definition data is interposed or multiplexed between Y and C signals of the screen center panel at an interval of 7.5 Hz.

A signal to be interposed is regarded as noise by the conventional television receiver and interferes with it.

If the multiplex level is lowered to decrease the interference, an S/N ratio is decreased, and the decoder will reproduce a screen having many noise components.

A further problem arises in a system which performs three-dimensional Y/C separation by a frame memory in an image processor.

In the system performing three-dimensional Y/C separation, intraframe and interframe signals are used to detect a difference, thereby discriminating a motion area, so that correct image motion detection can be performed. With the scheme described in literature (2), since a 2-frame offset subcarrier is used, a difference signal is obtained between 2 frames of a still image. This difference signal can be erroneously discriminated as the motion detection signal. An example of a television receiver that performs such three-dimensional Y/C separation includes a first generation EDTV (Extended Definition TV). Although the first generation EDTV can correctly detect a motion by using a frame comb filter, if a signal is processed in accordance with the scheme described above, a still image can be erroneously discriminated as a moving image.

As described above, various schemes have been proposed for converting a wide screen signal to a compatible signal and transmitting the compatible signal so that the wide screen signal can be reproduced by an existing television receiver. However, regarding a technique for superposing high definition data for reproducing a wide screen signal on a compatible signal, it often causes disturbance against a television receiver of the existing scheme.

It is, therefore, an object of the present invention to provide a multiplexed signal transmitting apparatus and a multiplexed signal receiving apparatus which do not cause disturbance against a television receiver of an existing scheme and which have a high interchangeability.

In order to achieve the above object, according to the present invention, a transmitting apparatus comprises a first encoder for limiting a band of a first image signal to provide a first component, and compressing the first component in the vertical direction, thereby converting the first image signal to a second image signal that can be displayed on a first portion of a screen of a conventional television receiver, a second encoder for compressing a second component, obtained by removing the first component from the first image signal, in the vertical direction, and encoding the frequency of the compressed second component to obtain a third image signal that can be multiplexed on a second portion of the screen of the conventional television receiver which is different from the first portion, first level controlling means for detecting image motion data by using the second image signal and controlling the level of the third image signal based on the motion detection signal, and means for multiplexing an output from the first level controlling means on an output from the first encoder in a time divisional manner and outputting an obtained output as a compatible signal.

According to the present invention, a receiving apparatus comprises a first decoder for obtaining the second image signal from the compatible signal, motion detecting means for obtaining an image motion detection signal by using the obtained second image signal, means for obtaining the third image signal from the compatible signal, second level controlling means for controlling a level of the third image signal obtained based on the motion detection signal obtained by said motion detecting means, a second decoder for decoding the third image signal obtained by the second level controlling means to have an original frequency band, and means for receiving the second image signal obtained by the first decoder and the third image signal obtained by the second decoder, expanding the second and third image signals in the vertical direction, and synthesizing the second and third image signals, thereby obtaining a wide screen signal.

This invention can be more fully understood from the following detailed description when taken in conjunction with the accompanying drawings, in which:

Fig. 1 is a block diagram of a transmitting apparatus according to an embodiment of the present invention;

Figs. 2A to 2C and Figs. 3A to 3E are spectrum charts for explaining the operation of the apparatus of Fig. 1;

Fig. 4 is a view for explaining the principle for encoding a high definition signal in the apparatus of Fig. 1;

Fig. 5 is a block diagram of a receiving apparatus according to an embodiment of the present invention;

Fig. 6 is a block diagram of a transmitting apparatus according to another embodiment of the present invention;

Figs. 7A to 7C and Figs. 7D to 7F are frequency spectrum charts and signal waveform charts, respectively, for explaining the operation of the apparatus of Fig. 6;

Fig. 8 is a block diagram of a transmitting apparatus according to still another embodiment of the present invention;

Fig. 9 is a block diagram of a receiving apparatus according to another embodiment of the present invention; and

Figs. 10 and 11 are block diagrams of receiving apparatuses according to other embodiments of the present invention.

The preferred embodiments of the present invention will be described with reference to the accompanying drawings.

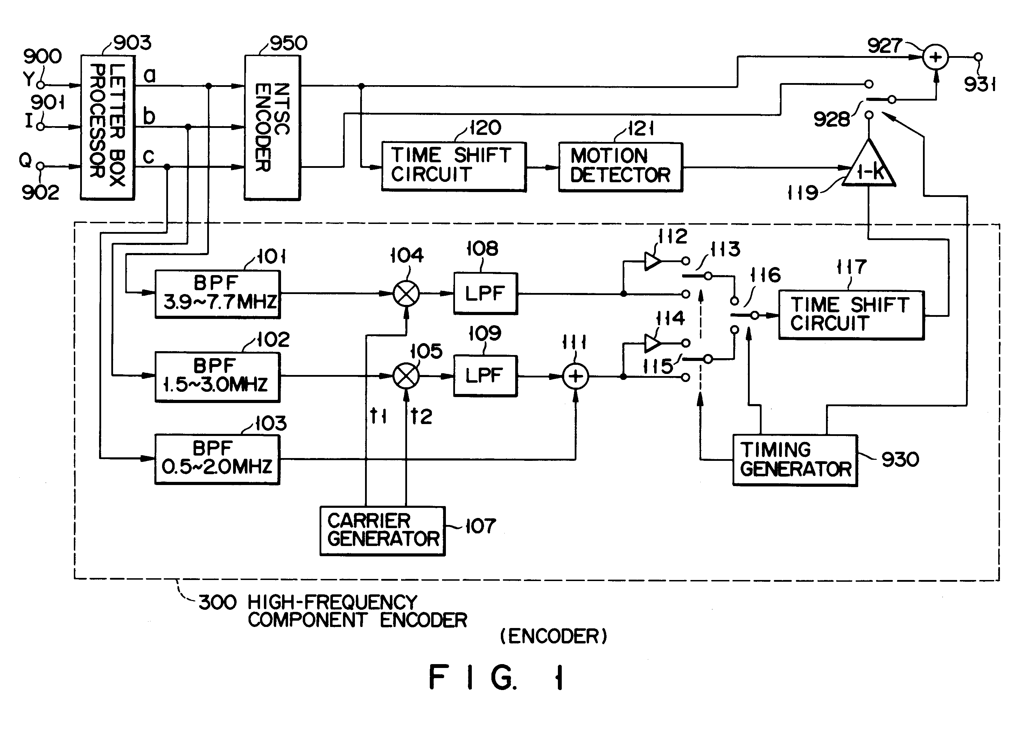

Fig. 1 shows an encoder according to an embodiment of the present invention.

Y, I, and Q signals of a wide screen signal including high definition data are supplied to input terminals 900, 901, and 902, and are input to a letter box processor 903. The letter box processor 903 generates a screen center panel signal and upper and lower panel signals, as described above, and outputs the Y, I, and Q signals from its output terminals a, b, and c, respectively. The Y signal has the screen center panel signal and the upper and lower panel signals. A vertical high-frequency component is frequency-division multiplexed on the upper and lower panel signals. The vertical high-frequency component is utilized for increasing the vertical resolution when a signal transmitted by the letter box system is to be restored to the original wide screen signal.

The Y, I, and Q signals are input to an NTSC encoder 950.

In the NTSC encoder 950, the Y signal is input to a low-pass filter to be limited to, e.g., 3.9 MHz or less and output. The I signal is limited to 1.5 MHz or less, and the Q signal is limited to 0.5 MHz or less. The band-limited I and Q signals are modulated by modulators in accordance with quadrature modulation and are summed by an adder, and the sum signals are output as chrominance signals C.

The Y signal appearing at the output terminal a of the letter box processor 903 is also input to a band-pass filter 101 included in a high-frequency component encoder 300, and its component of 3.9 to 7.7 MHz is extracted. The I signal appearing at the output terminal b̄ is input to a band-pass filter 102, and its component of 1.5 to 3.0 MHz is extracted. The Q signal appearing at the output terminal c̄ is input to a band-pass filter 103, and its component of 0.5 to 2.0 MHz is extracted.

An output from the band-pass filter 101 is input to a multiplier 104, modulated and frequency-shifted by a carrier f1, and is input to a low-pass filter 108, so that its unnecessary component is removed. An output from the band-pass filter 102 is also input to the multiplier 105, modulated and frequency-shifted (2.0 MHz or more) by a carrier f2, and its unnecessary component is removed by a low-pass filter 109. The carriers f1 and f2 are generated by a carrier generator 107.

A Y high definition signal output from the low-pass filter 108 is input to one terminal of a selector 113 through an inverter 112, and is also input directly to the other terminal of the selector 113. An I high definition signal output from the low-pass filter 109 is added by an adder 111 to a Q high definition signal output from the band-pass filter 103. A C high definition signal output from the adder 111 is input to one terminal of a selector 115 through the inverter 114, and is also input directly to the other terminal of the selector 115.

Each of the selectors 113 and 115 is switched every two frames to selectively output an inverted signal and a non-inverted signal. The output from the selector 113 or 115 is input to either of the two input terminals of a selector 116. The selector 116 is switched every frame to selectively output signals appearing at its input terminals.

The output from the selector 116 is input to a time shift circuit 117, adjusted on a time base to correspond to a screen position on either upper or lower panel, and is output. The output from the time shift circuit 117 is input to a coefficient multiplier 119 and level-controlled in accordance with a motion detection signal.

The motion detection signal is made of the Y signal located at the screen center panel. More specifically, the output signal Y from the NTSC encoder 950 is input to a time shift circuit 120, adjusted on a time base (to correspond to an upper or lower panels), and is input to a motion detector 121.

The motion detector 121 sets a motion detection amount k close to "1" when the motion is large, and to "0" when the motion is small. As a result, a high definition signal is transmitted for a still image.

The output from the coefficient multiplier 119 is supplied to one input terminal of a selector 928. The other input terminal of the selector 928 receives the C signal from the NTSC encoder 950. The selector 928 selectively receives a signal from the NTSC encoder 950 for the screen center panel and the signal from the coefficient multiplier 119 for the upper and lower panels. An output from the selector 928 is input to an adder 927 to be added to the Y signal from the NTSC encoder 950, and is supplied to an output terminal 931. The selectors 113, 115, 116, and 928 are controlled in accordance with a timing signal from a timing generator 930.

The signal spectra of the output signals from the respective portions of the encoder will be described.

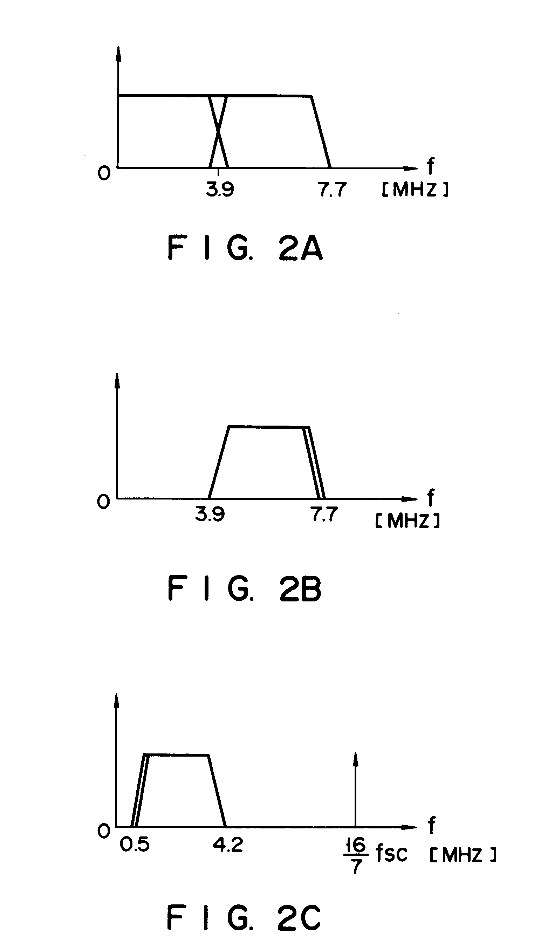

Fig. 2A shows the spectrum of the Y signal of the wide screen signal appearing at the terminal ā. The Y signal is limited to the band shown in Fig. 2B by the band-pass filter 101, modulated by the multiplier 104 by the carrier f1 = (16/7)fsc = 8.18 MHz so that it is frequency-shifted to the range shown in Fig. 2C. Thus, the Y signal is shifted to fall within a frequency band which can be transmitted by the existing system.

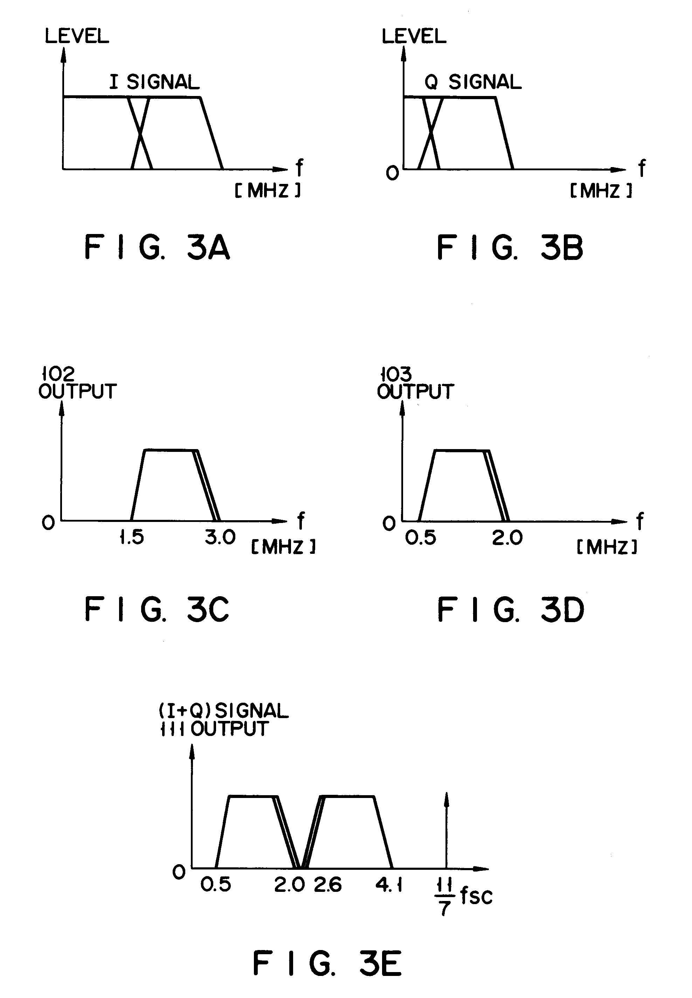

Fig. 3A shows the spectrum of the I signal appearing at the terminal b̄, and Fig. 3B shows the spectrum of the Q signal appearing at the terminal c̄. The I signal is band-limited by the band-pass filter 102 to the range shown in Fig. 3C, and modulated by the multiplier 105 by the carrier f2 = (11/7)fsc = 5.6 MHz, so that it is frequency-shifted to the range shown in Fig. 3E. The Q signal appearing at the terminal c̄ is band-limited by the band-pass filter 103 to the range shown in Fig. 3D. Since this signal range is different from that of the I signal which is frequency-shifted previously, no problem arises if it is synthesized with the Q signal by the adder 111, and a spectrum as shown in Fig. 3E is obtained.

The Y high definition signal YH and the C high definition signal CH obtained in this manner are processed in the following manner.

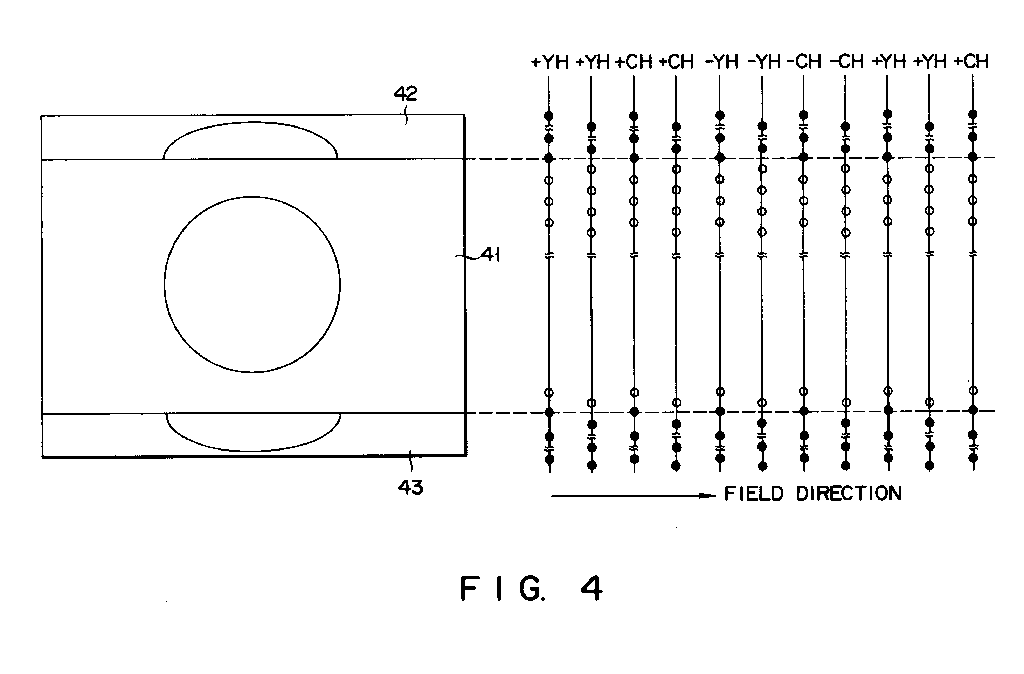

Fig. 4 is a view for explaining signal processing performed by the selectors 113, 115, and 116.

In this system, a wide screen signal is converted and divided into a screen center panel 41 and upper and lower panels 42 and 43 on a screen of the existing method. High-frequency components are compressed and multiplexed on the upper and lower panels 42 and 43.

Assume that the compressed signals, i.e., the Y high definition signal YH and the C high definition signal CH are to be transmitted. As shown in Fig. 4, a positive +YH signal is selected in the first and second fields. A positive +CH signal is selected in the third and fourth fields. A negative -YH signal is selected in the fifth and sixth fields. A negative -CH signal is selected in the seventh and eighth fields. Namely, a signal of a given polarity is selected in every two frames. Of these selected signals, the selector 116 alternately selects the Y high definition signal +YH or -YH, or the C high definition signal +CH or -CH. Namely, the selector 116 selects signals every frame.

When the signals are selected in this manner, the Y and C high definition signals +YC, +CH, -YH, and -CH are repeatedly arranged in the field direction. When the signals are transmitted in this order, a high definition signal can be separated by obtaining its interframe difference. This signal processing will be described in more detail with reference to the encoder.

When a compatible signal is transmitted by the encoder described above, a horizontal high-frequency component is not multiplexed at the screen center panel. Thus, when an interframe difference of a screen center panel signal is obtained to separate a luminance signal from chrominance signals by motion adaptive processing, so that an image range is discriminated, a high definition signal will not cause a disturbance against the television receiver. No noise will appear on the screen of the television receiver of the existing method.

The above description has been made on the encoder. A decoder for processing a multiplexed signal transmitted in the above manner will be described.

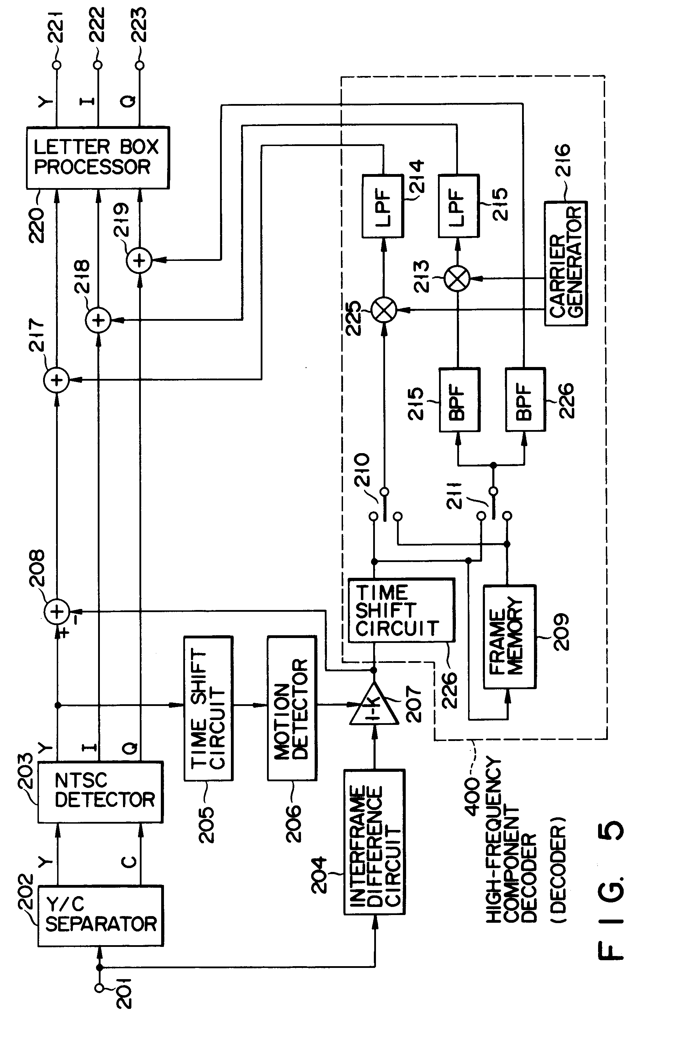

Fig. 5 shows an example of a decoder.

A multiplexed signal is input to an input terminal 201. This signal can be directly input to a television receiver of the existing system and reproduced. The multiplexed signal is input to a Y/C separator 202 for separating a luminance signal from chrominance signals, and is also input to an interframe difference circuit 204.

The Y/C separator 202 separates a luminance signal from chrominance signals for the screen center panel, and the separated Y and C signals are input to an NTSC decoder 203. A difference signal obtained by the interframe difference circuit 204 is arithmetically processed for signals at the upper and lower screen frames. The processing result is supplied to a coefficient multiplier 207. The output of the coefficient multiplier 207 is supplied to a subtracter 208 and a time shift circuit 226. The time shift circuit 226 maches the input signal with the signals for the center panel along the time base.

Y, I, and Q signals are obtained by the NTSC decoder 203. The Y signal is input to a time shift circuit 205 and is matched with the signals for the upper and lower screen frames along the time base. An output from the time shift circuit 205 is input to a motion detector 206 to detect a motion area. The gain of the coefficient multiplier 207 is controlled in accordance with the motion detection signal from the motion detector 206. In the case of a still image, a multiplexed signal (screen upper and lower panel signals) is output from the coefficient multiplier 207. The multiplexed signal is supplied to the subtracter 208, a frame memory 209, and one terminal of each of a selector 210 and a selector 211. The frame memory 209 and the selectors 210 and 211 constitute a high-frequency component decoder 400 together with other components.

The subtracter 208 removes the multiplexed signals mixed in the upper and lower panels. The frame memory 209 delays a signal by one frame period. The delayed signal is supplied to the other input terminal of each of the selectors 210 and 211.

Each of the selectors 210 and 211 alternately selects its terminal every frame. As a result, the selector 210 outputs a Y high definition signal, and the selector 211 outputs a C high definition signal.

Outputting from the interframe difference circuit 204 and outputting from the selectors 210 and 211 will be described in more detail.

High definition signals are output in an order of +YH, +YH, +CH, +CH, -YH, -YH, -CH, -CH,..., as described with reference to the encoder.

When interframe differences of these signals are obtained, signals YH, CH, YH, CH, YH, CH,... in units of frames will be obtained.

When these signals are delayed by one frame, signals YH appear sequentially at one and the other terminals of the selector 210, and signals CH appear sequentially at one and the other terminals of the selector 211.

The high definition signal YH selected by the selector 210 is supplied to a multiplier 225, and the high definition signal CH output from the selector 211 is supplied to band-pass filters 212 and 213. The band-pass filter 212 extracts an I signal of a 2.6 to 4.1 MHz band and inputs it to a multiplier 213. The multiplier 213 receives the carrier f2 [= (11/7)fsc = 5.6 MHz] from a carrier generator 216. As a result, the multiplier 213 obtains the I signal shifted to the original frequency band, and the I signal is extracted by a low-pass filter 215. A band-pass filter 226 extracts a Q signal of a 0.5 to 2.0 MHz band.

The high definition signal YH selected by the selector 210 is input to the multiplier 225. The multiplier 225 receives a carrier f1 [= (16/7)fsc = 8.18 MHz] generated by the generator 216. The high definition signal YH is shifted to the original frequency band by the carrier f1. A signal obtained by the multiplier 225 is input to an adder 217 through a low-pass filter 214.

The high definition signal YH is added by the adder 217 to the Y signal output from the subtracter 208. The I high definition signal output from a low-pass filter 215 is added by an adder 218 to the I signal. The Q high definition signal from the band-pass filter 226 is input to an adder 219 and added to the Q signal supplied from the decoder 203. The respective high definition signals described above are located to correspond to the timings of the upper and lower panels.

Outputs from the adders 217, 218, and 219 are input to a letter box processor 220. The letter box processor 220 converts signals corresponding to upper and lower panels to scanning lines and reproduces them as high-frequency components of a wide screen signal. The letter box processor 220 also converts a signal corresponding to the screen center panel to a scanning line count of the wide screen signal. The signals converted in this manner are synthesized and the synthesized signals appear at output terminals 221, 222, and 223 as the Y, I, and Q signals, respectively.

As described above, high definition signals as the horizontal high frequency signals are multiplexed to the signals located on the upper and lower panels in accordance with the scheme described with reference to Fig. 4. Vertical high-frequency components are also multiplexed to the upper and lower panels as is apparent from the letter box system described in the literature. Therefore, the letter box processor 220 of the decoder must decode the vertical high-frequency components. In this case, when high definition signals as the horizontal high frequency-components are included in the upper and lower panels, the vertical high-frequency components cannot be separated. For this reason, an unnecessary high definition signal must be removed at the input of the letter box processor 220.

A unnecessary high definition signal can be easily removed by adding an interframe signal to it. This is because that, in the present invention, a high definition signal is transmitted in accordance with the scheme as described with reference to Fig. 4. In this manner, according to the present invention, a transmission system that can easily remove an unnecessary high definition signal is employed.

The present invention is not limited to the embodiments described above.

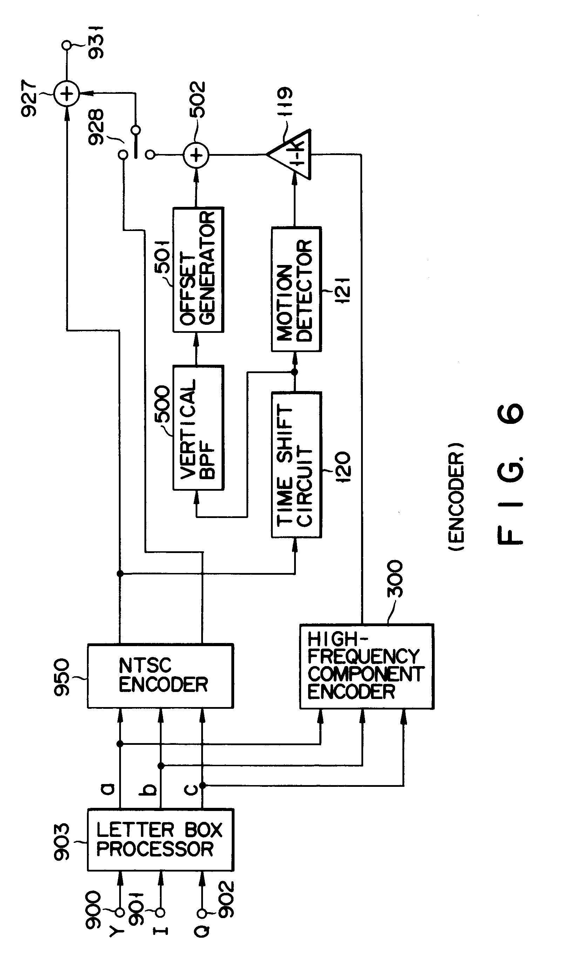

Fig. 6 shows an encoder according to another embodiment.

The same or identical portions as in Fig. 1 are denoted by the same reference numerals. The encoder of Fig. 6 is different from that of Fig. 1 in the following respects. Namely, in Fig. 6, a high definition signal obtained by a coefficient multiplier 119 is input to an adder 502 so that it is offset in accordance with the level of the vertical high-frequency component of the signal for the screen center panel.

More specifically, an output signal from a time shift circuit 120 is input to a motion detector 121 and also to a vertical band-pass filter 500. In accordance with the level of the high-frequency component obtained by the vertical band-pass filter 500, an offset generator 501 obtains a DC offset output, and supplies it to an adder 502. As a result, the high definition signal is offset in accordance with the level of the vertical high-frequency component of the signal for the screen center panel.

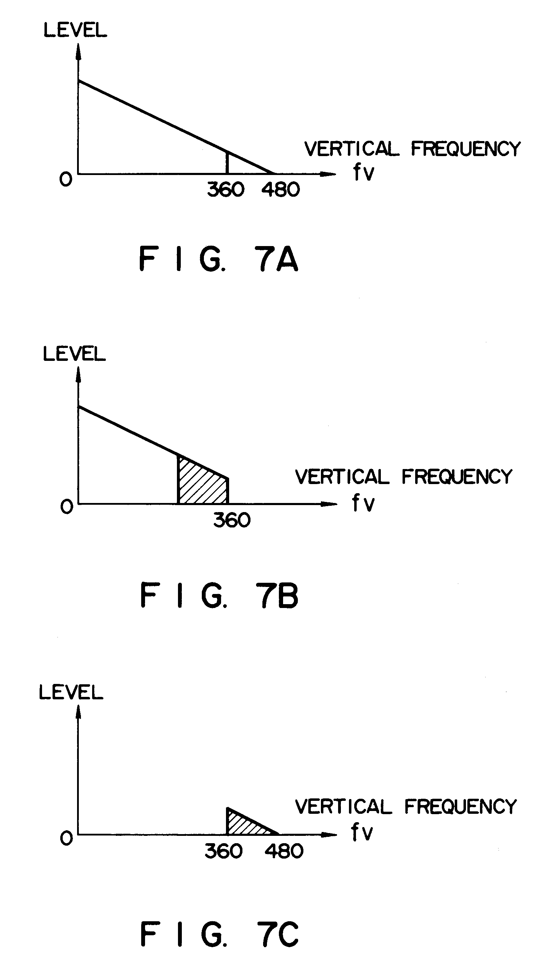

Figs. 7A to 7C show spectra for explaining the characteristic feature of the encoder shown in Fig. 6. Fig. 7A shows vertical frequency components of a wide screen signal. There are 480 vertical frequency components per screen level. Of the vertical frequency components, 360 to 480 components per screen level are multiplexed on the upper and lower panels as the high definition signals and transmitted, and not more than 360 components per screen level are transmitted as the signals for the screen center panel. Fig. 7B shows the spectrum of a signal for the screen center panel, and Fig. 7C shows the spectrum of a signal for an upper or lower panel. The hatched portions in Figs. 7B and 7C are highly correlated to each other in the case of a moving image. Namely, when the signal level at the screen center panel is high, the levels of the corresponding signals multiplexed on the screen upper and lower panels are also high.

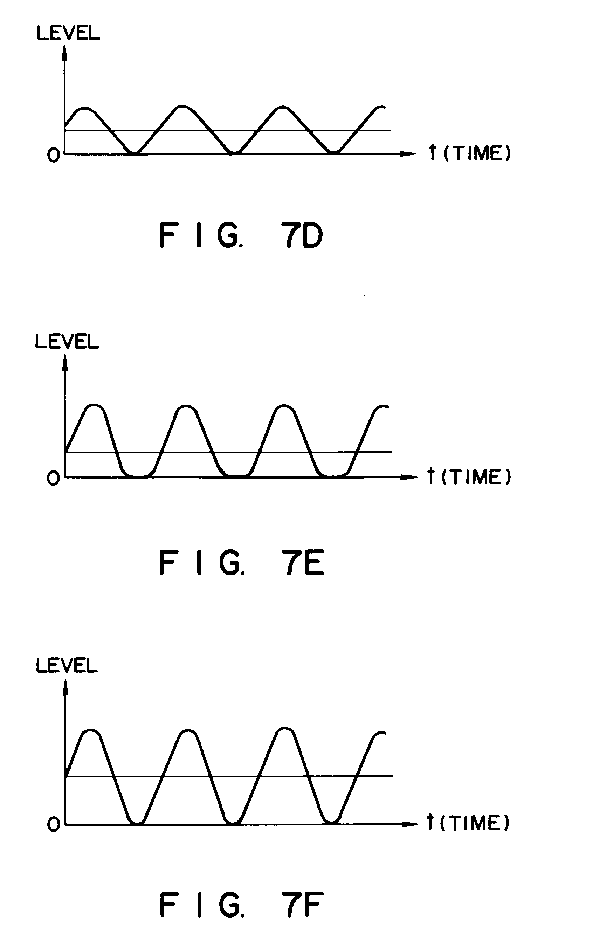

A case will be described in which the vertical high-frequency component is an AC component, as shown in Fig. 7D. When this component is multiplexed on the upper or lower panel, if its amplitude is large, e.g., its negative polarity can be flattened, as shown in Fig. 7E. In order to prevent this, DC offset may be performed, as shown in Fig. 7F. According to this system, in the case of a moving image, a high-frequency signal component for the screen center panel is regarded to be highly correlated with a high definition signal. An offset signal is generated in accordance with the level of the vertical high-frequency component of the signal for the screen center panel, and is added to the high definition signal by the adder 502. As a result, the reliability of the high definition signal is further enhanced.

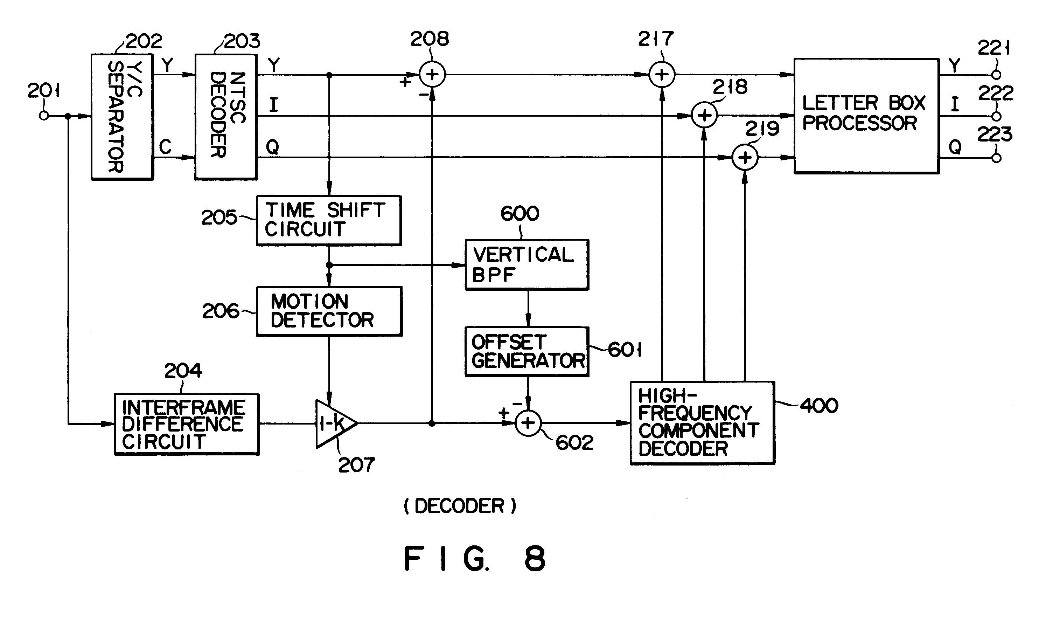

Fig. 8 shows an arrangement example of a decoder for receiving a signal multiplexed by the encoder described above.

The same reference numerals are used to denote the same or equivalent portions as in Fig. 5. In the case of this system, an output from a time shift circuit 205 is input to a vertical band-pass filter 600, and a high-frequency component extracted by the filter 600 is input to an offset generator 601. The offset generator 601 generates a DC offset output in accordance with the level of the high-frequency component and supplies it to a subtracter 602. The subtracter 602 adjusts the level of the high definition signal output from a coefficient multiplier 207 in accordance with the DC offset, thereby restoring the high definition signal to the original level of the encoder side. The high definition signal thus controlled is input to the high-pass component decoder described with reference to Fig. 5.

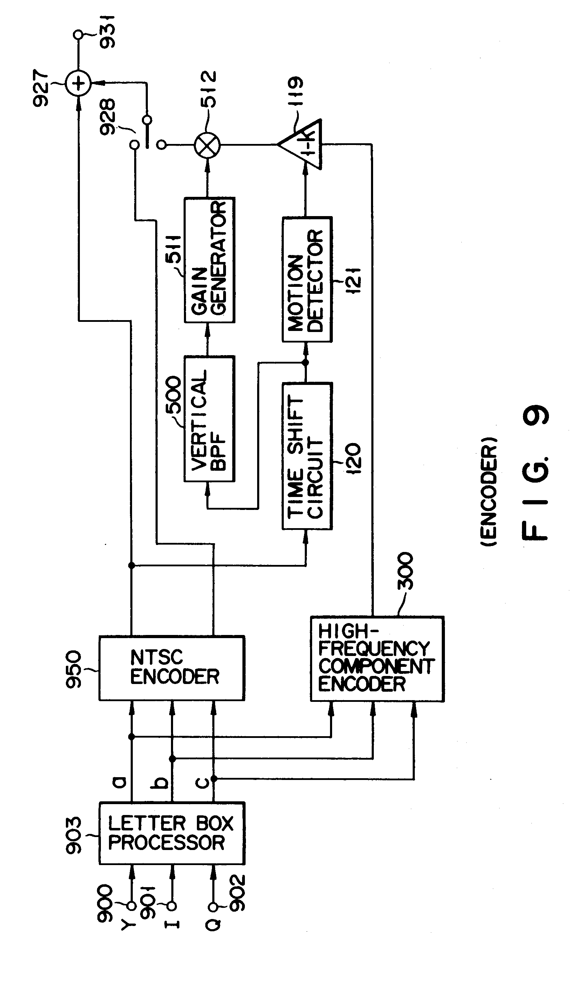

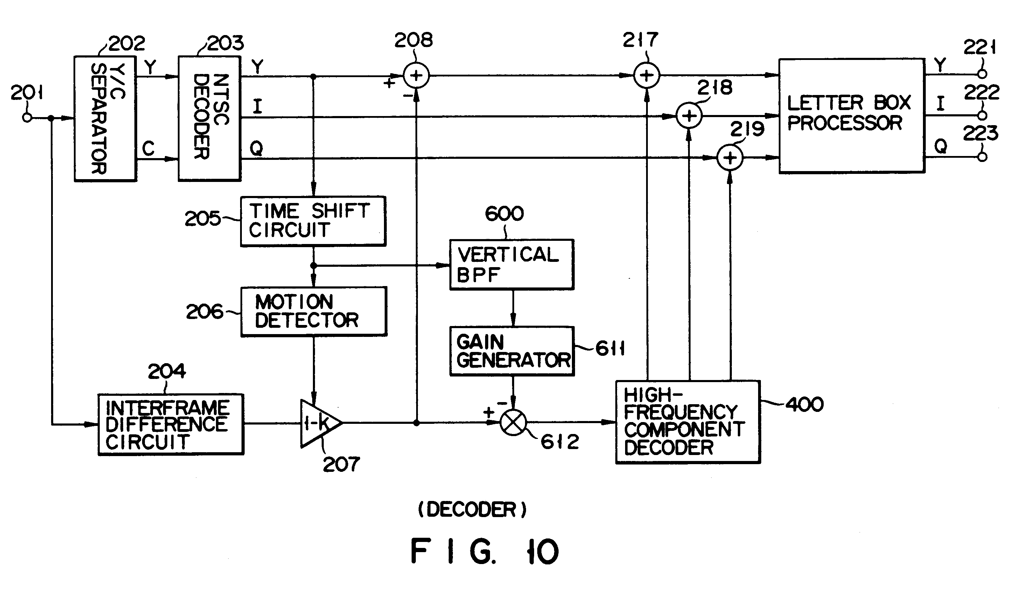

Figs. 9 and 10 show other embodiments of the present invention. Fig. 9 shows an encoder, and Fig. 10 shows a decoder.

The encoder of Fig. 9 is different from that of Fig. 6 in that a gain generator 511 replaces the offset generator 501 and that a multiplier 512 replaces the adder 502. As a result, the level of a high definition signal is changed in accordance with the vertical high-frequency component. When the level of the vertical high-frequency component is high, the high definition signal is suppressed and is transmitted such that its waveform may not be distorted.

The decoder of Fig. 10 is different from that of Fig. 8 in that a gain generator 611 replaces the offset generator 601 and that a multiplier 612 replaces the adder 602. As a result, the level of a high definition signal is changed in accordance with the vertical high-frequency component. When the level of the vertical high-frequency component is high, its level is expanded and restored to the original level, contrary to the transmitting side.

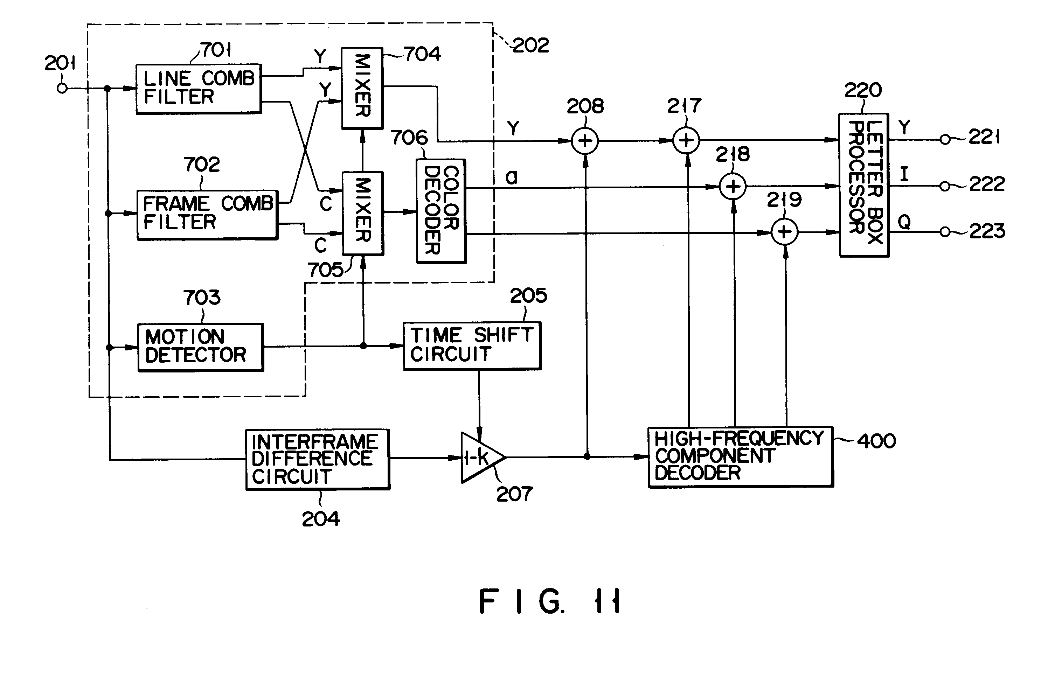

Fig. 11 shows a decoder according to still another embodiment of the present invention.

The decoder of Fig. 11 is different from those of Figs. 5 and 8 by its Y/C separator surrounded by a broken line.

A compatible signal supplied to an input terminal 201 is supplied to a line comb filter 701, a frame comb filter 702, and a motion detector 703. Both line comb filters 701 and frame comb filter 702 separate the compatible signal into a luminance signal (interline sum signal) and chrominance signals (interline difference signals). The luminance signal separated by the filter 701 is input to a mixer 704, and the chrominance signals separated by it are input to a mixer 705. The luminance signal separated by the filter 702 is input to the mixer 704, and the chrominance signals separated by it are input to the mixer 705. A motion detection signal detected by the motion detector 703 controls the mixing ratios of the mixers 704 and 705. In the case of a still image, the ratio of the interframe difference signal is increased, and in the case of a moving image, the ratio of the interline difference signal is increased. An output from the mixer 705 is input to a color decoder 706 and output as I and Q signals. The I signal is input to an adder 218, and the Q signal is input to an adder 219. Except for these points, the decoder of Fig. 11 is the same as those of Figs. 5 and 8.

In this manner, when the motion-suited Y/C separator 202 is used, the motion detection signal as the output from the motion detector 703 included in the separator 202 can also be used for controlling a coefficient multiplier 207 through a time shift circuit 205, thereby decreasing load on the hardware.

As has been described above, according to the present invention, high definition signals multiplexed on the upper and lower panels are controlled by using a signal for the screen center panel, and high definition data is not multiplexed on the signal for the screen center panel. As a result, when a signal is reproduced by a receiver of an existing scheme, no disturbance occurs on the screen center panel. When motion detection is performed, it can be done correctly as the signal for the screen center panel free from a disturbance signal is used. Since a high definition signal is offset or level-controlled by utilizing the fact that it is correlated with the vertical high-frequency component of a signal for the screen center panel, it can be transmitted without being distorted.

## Claims

1. A multiplexed signal transmitting apparatus for converting a first image signal for a screen longer in a lateral direction than a screen obtained by a conventional television signal to a signal which can be reproduced with a receiver of a conventional method, comprising:

   a first encoder (950) for limiting a band of the first image signal to provide a first component, and compressing the first component in the vertical direction, thereby converting the first image signal to a second image signal that can be displayed on a first portion of a screen of the conventional television receiver;

   a second encoder (300) for compressing a second component, obtained by removing the first component of the first image signal, in the vertical direction, and encoding the frequency of the compressed second component to obtain a third image signal that can be multiplexed on a second portion of the screen of the conventional television receiver which is different from the first portion; and

   first level controlling means (120, 121, 119) for detecting image motion data by using the second image signal and controlling the level of the third image signal based on the motion detection signal.

2. An apparatus according to claim 1, characterized in that said level controlling means further comprises means (501, 502) for correcting a direct current offset for the third image signal controlled based on the motion detection signal, and a direct current offset amount is controlled in accordance with a level of a high-frequency component of the second image signal.

3. An apparatus according to claim 1, characterized in that said level controlling means further comprises means (500, 511, 512) for controlling a gain of the third image signal based on the motion detection signal, and a gain control amount is controlled in accordance with a level of a high-frequency component of the second image signal.

4. A multiplexed signal receiving apparatus for receiving a compatible signal which is for a screen obtained by a conventional television signal and which has first and second portions, in which a first image signal is included on the first portion thereof corresponding to a lateral elongated screen, and a second image signal for changing the first image signal to have high definition is multiplexed on the second portion thereof which is different from the first portion, comprising:

a first decoder (202, 203) for obtaining the first image signal from the compatible signal;

motion detecting means (205, 206) for obtaining an image motion detection signal by using the obtained first image signal;

means (204) for obtaining the second image signal from the compatible signal;

second level controlling means (207) for controlling a level of the second image signal obtained based on the motion detection signal obtained by said motion detecting means;

a second decoder (400) for decoding the second image signal obtained by said second level controlling means to have an original frequency band; and

means (217, 218, 219, 220) for receiving a first component obtained by said first decoder and a second component obtained by said second decoder, expanding the first and second components in the vertical direction, and synthesizing the first and second components, thereby obtaining a wide screen signal.

5. An apparatus according to claim 4, characterized in that said level controlling means further comprises means (600, 601, 602) for correcting a direct current offset of the second image signal controlled based on the motion detection signal, and a direct current offset amount is controlled in accordance with a level of a high-frequency component of the first image signal by a signal having opposite characteristics to those of a signal of a transmission side.

6. An apparatus according to claim 4, characterized in that said level controlling means further comprises means (600, 611, 612) for controlling a gain of the second image signal controlled based on the motion detection signal, and a gain control amount is controlled in accordance with a level of a high-frequency component of the first image signal by a signal having opposite characteristics to those of a signal of a transmission side.

7. An apparatus according to claim 4, characterized in that said first decoder (202, 203) for obtaining the first image signal from the compatible signal and said motion detecting means (205, 206) constitute a motion adaptive luminance/color separating circuit, and the motion detection signal used in said luminance/color separating circuit is used as the motion detection signal of said level controlling means.

8. A multiplexed signal transmitting apparatus and a multiplexed signal receiving apparatus, wherein said multiplexed signal transmitting apparatus comprises:

a first encoder (950) for limiting a band of the first image signal to provide a first component, and compressing the first component in the vertical direction, thereby converting the first image signal to a second image signal that can be displayed on a first portion of a screen of the conventional television receiver;

a second encoder (300) for compressing a second component, obtained by removing the first component from the first image signal, in the vertical direction, and encoding the frequency of the compressed second component to obtain a third image signal that can be multiplexed on a second portion of the screen from the conventional television receiver which is different from the first portion;

first level controlling means (120, 121, 119) for detecting image motion data by using the second image signal and controlling the level of the third image signal based on the motion detection signal; and

means (928, 927) for multiplexing an output from said first level controlling means and an output from said first encoder on a time base and outputting an obtained multiplexed signal as a compatible signal,

and said receiving apparatus comprises:

a first decoder (202, 203) for obtaining the second image signal from the compatible signal;

motion detecting means (205, 206) for obtaining an image motion detection signal by using the obtained first image signal;

means (204) for obtaining the second image signal from the compatible signal;

second level controlling means (207) for controlling a level of a third image signal obtained based on the motion detection signal obtained by said motion detecting means;

a second decoder (400) for decoding the second image signal obtained by said level controlling means to have an original frequency band; and

means (217, 218, 219, 220) for receiving the second image signal obtained by said first decoder and the third image signal obtained by said second decoder, expanding the third and fourth image signals in the vertical direction, and synthesizing the third and fourth image signals, thereby obtaining a wide screen signal.

9. A multiplexed signal transmitting apparatus and a multiplexed signal receiving apparatus according to claim 8, characterized in that said second encoder comprises:

frequency shift means (107, 104, 105) for shifting the second component to a low frequency band, the second component including a luminance high definition signal and a color high definition signal;

means (112, 113) for obtaining a non-inverted output and an inverted output of the luminance high definition signal obtained by said frequency shift means;

means (114, 115) for obtaining a non-inverted output and an inverted output of the color high definition signal obtained by said frequency shift means; and

selecting means (116) for selecting the non-inverted output of the luminance high definition signal in first and second fields, selecting the inverted output of the color high definition signal in third and fourth fields, selecting the inverted output of the luminance high definition signal in fifth and sixth fields, selecting the inverted output of the color high definition signal in seventh and eighth fields, and outputting the selected outputs.

10. A multiplexed signal transmitting apparatus and a multiplexed signal receiving apparatus according to claim 8, characterized in that:

said means for obtaining the third image signal from the compatible signal comprises means (204) for obtaining an interframe difference signal of the first image signal; and

said second decoder comprises:

delay means (209) for delaying the difference signal obtained by said second level control means by one frame, and means (210, 211) for receiving a one-frame delay difference signal and separating the delay signal into luminance high definition signal components that are consecutive over frames and color high definition signal components that are consecutive over frames; and

means (225, 213, 216) for shifting the frequency of the luminance high definition signal components and the color high definition signal components to original frequency bands.

(ENCODER)

FIG. 1

EP 0 467 403 A2

F I G. 2A

F I G. 2B

F I G. 2C

F I G. 3A

F I G. 3B

F I G. 3C

F I G. 3D

F I G. 3E

F I G.  4

EP 0 467 403 A2

F I G. 5

EP 0 467 403 A2

(ENCODER)

F I G. 6

EP 0 467 403 A2

LEVEL

VERTICAL FREQUENCY
fv

O          360  480

F I G. 7A

LEVEL

VERTICAL FREQUENCY
fv

O          360

F I G. 7B

LEVEL

VERTICAL FREQUENCY
fv

O          360  480

F I G. 7C

LEVEL

t (TIME)

F I G. 7D

LEVEL

t (TIME)

F I G. 7E

LEVEL

t (TIME)

F I G. 7F

( DECODER )

# F I G. 8

EP 0 467 403 A2

(ENCODER)

F I G. 9

(DECODER)

F I G. 10

F I G. 11

EP 0 467 403 A2